# EUROPEAN PATENT SPECIFICATION

(11) **EP 3 241 027 B1**
(45) Date of publication and mention of the grant of the patent: **08.03.2023**
(21) Application number: 14837012.5
(22) Date of filing: 31.12.2014
(51) Int. Cl.: G01P 15/08, B81B 5/00, B81B 7/00, B81C 1/00, G01P 15/125, G01P 15/18

(54) **A THREE AXIS CAPACITIVE MEMS ACCELEROMETER ON A SINGLE SUBSTRATE**
DREIACHSIGER KAPAZITIVER MEMS-BESCHLEUNIGUNGSMESSER AUF EINEM GEMEINSAMEN SUBSTRAT
ACCÉLÉROMÈTRE MEMS CAPACITIF À TROIS AXES SUR SUBSTRAT UNIQUE

(43) Date of publication of application: 08.11.2017
(73) Proprietor: Mikrosistemler Sanayi ve Ticaret Limited Sirketi, Çankaya/Ankara (TR)
(72) Inventor: Aydemir, Akin, 06800 Cankaya/Ankara (TR); Akin, Tayfun, 06800 Cankaya/Ankara (TR)
(74) Representative: Yalçiner Patent and Consulting Ltd.
(86) International application number: PCT/TR2014/000531
(87) International publication number: WO 2016/108770

(56) References cited:
- US-A1- 2008 053 229
- US-A1- 2010 001 616
- US-A1- 2012 223 410
- SANZ-VELASCO A ET AL: "Sensors and actuators based on SOI materials", SOLID STATE ELECTRONICS, ELSEVIER SCIENCE PUBLISHERS, BARKING, GB, vol. 50, no. 5, 1 May 2006 (2006-05-01), pages 865-876, XP027986907, ISSN: 0038-1101 [retrieved on 2006-05-01]
- DANIEL J H ET AL: "A microaccelerometer structure fabricated in silicon-on-insulator using a focused ion beam process", SENSORS AND ACTUATORS A: PHYSICAL, ELSEVIER BV, NL, vol. 73, no. 3, 30 March 1999 (1999-03-30) , pages 201-209, XP004167982, ISSN: 0924-4247, DOI: 10.1016/S0924-4247(98)00237-4

## Description

### Related Field of the invention

The invention relates to a three axis capacitive mems accelerometer on a single substrate. In this invention a varying gap differential capacitive sensing three-axis accelerometer using SOI on glass process is introduced.

### Background of the Invention (Prior Art)

Micro-Electro-Mechanical Systems and micromachining technologies have enabled the use of miniaturized transducers, actuators, resonators, etc. in many high technology sensor systems due to their small size, low-cost, and high-reliability compared to the conventional electromechanical systems. This technology has a wide range of application areas including consumer electronic market, the automotive market, and even military electronic products.

One of the most widely used transducer is accelerometers and they have been widely used in inertial navigation, guidance systems, automobile air bag deployment systems, and motion control systems.

Capacitive MEMS accelerometers have the advantages of having low temperature coefficients, low power dissipation, low fabrication costs, and feasibility of MEMS and IC integration. Due to those advantages, capacitive sensing based MEMS accelerometers have been widely used and received high attention in the MEMS market. To date, many capacitive sensing accelerometers have been realized using different micro-fabrication technologies, for instance, surface micromachining, bulk micromachining, and post CMOS process. Specifically, differential capacitive sensing is a promising approach due to the further advantages including high sensitivity, low noise, and low power dissipation characteristics.

Recently, there has been an increase in the SOI based MEMS accelerometers due to various advantages of SOI wafers, namely, thick devices can be easily achieved, having low residual stress, and simple fabrication processes. Several SOI based MEMS accelerometers have been reported that are designed and fabricated successfully.

However, most of the applications mentioned above require three-dimensional acceleration sensing at the same time. On the other hand, most of the current micro fabrication approaches including SOI-MEMS accelerometers are limited to fabricate these differential sensing capacitive accelerometers in either in the form of a single-axis or dual-axis. So, it still remains a challenge to realize a vertical-axis, out of plane, accelerometer based on differential capacitive sensing mechanism, and further to integrate that vertical-axis accelerometer to the lateral ones to achieve a three-axis accelerometer with capacitive sensing elements for all axes.

As a result, implementation of a differential capacitive sensing vertical axis accelerometer to the lateral axis accelerometer is still a challenging process.

Considering the application area of the accelerometers, in general it is required to have the ability of sensing acceleration in all three orthogonal axes at the same time. On the other hand, no vertical axis accelerometer is reported based on the same working principle compared the lateral differential capacitive accelerometers, varying gap electrodes.

In the early periods, capacitive vertical-axis accelerometers were employed based on varying overlap area method in which capacitance is measured between movable and stationary vertical comb electrodes. Z-axis capacitive sensing is employed by a torsional or out of plane movement of the suspended electrodes in which the change in the capacitive area between the fixed and movable electrodes is monitored. However, the accelerometers based on the varying overlap area have low sensitivity compared to the ones based on the varying gap accelerometers and fabrication processes are further complicated.

Vertical-axis capacitive accelerometers have also been developed using silicon on insulator (SOI) wafers. On the other hand, the electrode design in those vertical-axis accelerometers is not based on the differential sensing mechanism in which only one fixed electrode under or above the movable electrode is used to sense the acceleration in the out of plane direction.

Recently, differential vertical-axis accelerometers on SOI wafers are developed using different type of vertical comb electrodes. In this design, acceleration in the out of plane direction is differentially detected by using a set of the novel vertical electrodes, in which different height of movable and stationary comb electrodes are employed by using two masks and a time-controlled Reactive Ion Etch (RIE) process. Furthermore, differential capacitive three-axis SOI accelerometer has also been demonstrated using this type of movable and stationary comb electrodes. However, Z-axis accelerometer with the gap closing differential electrodes based on the working principle of the lateral ones using SOI wafer has not been reported yet.

More recently, CMOS based MEMS vertical axis accelerometer with a differential varying gap capacitive sensing electrodes is presented. A post-CMOS wet etching process is used to form the suspended electrode in the accelerometer. But still one of the main challenges is the implementation of a process for the fabrication of a vertical axis accelerometer design to the lateral ones, which should be based on the same working principle, differential sensing with varying gap electrodes.

Lastly, another approach for the fabrication of a three-axis accelerometer is assembling of two or three single axis accelerometers on a separate substrate for three-dimensional acceleration sensing. However, this approach increases the packaging size, cost and also causes high cross axis sensitivities due to the highly possible misalignment problems.

US 2008/053229, US 2010/0001616 A1, US 2012/0223410 A1 and Sanz-Velasco et al (Solid state Electronics, V:50 pp:865-876) are some documents that disclose out of plane axis accelerometer.

In particular, US2008/053229 describes a semiconductor differential accelerometer where the proof mass is movable between a fixed plate formed by a deposited layer and a fixed plate patterned from a handle layer of a SOI wafer .

All the approaches mentioned above either suffer from non-differential sensing on the vertical axis accelerometer or complicated fabrication processes in the three axis acceleration sensing.

In order to eliminate the deficiencies in the mentioned fabrication and design approaches, a varying gap differential capacitive sensing three-axis accelerometer using SOI on glass process is introduced in which the new concept and the solutions are proposed in the present invention.

### Aims of the I nvention and Problems Solved

The problems in the prior art and the aims of this invention are explained below.
1) Capacitive vertical-axis accelerometers were employed based on varying overlap area method in which capacitance is measured between movable and stationary vertical comb electrodes. Z-axis capacitive sensing is employed by a torsional or out of plane movement of the suspended electrodes in which the change in the capacitive area between the fixed and movable electrodes is monitored. However, the accelerometers based on the varying overlap area have low sensitivity compared to the ones based on the varying gap accelerometers and fabrication processes are further complicated.
2) Vertical-axis capacitive accelerometers have also been developed using silicon on insulator (SOI) wafers. However, the electrode design in those vertical-axis accelerometers are not based on the differential sensing mechanism in which only one fixed electrode under or above the movable electrode is used, which results in a low performance for the accelerometers.
3) Differential vertical-axis accelerometers using SOI wafers are developed using different type of vertical-axis vertical comb electrodes. In this design, acceleration in the out of plane direction is differentially detected by using a set of the novel vertical electrodes, in which different height of movable and stationary comb electrodes are employed by using two masks and a time-controlled Reactive Ion Etch (RIE) process. Furthermore, differential capacitive three-axis SOI accelerometer has also been demonstrated using this type of movable and stationary comb electrodes. However, Z-axis accelerometer with the gap closing differential electrodes based on the working principle of the lateral ones using SOI wafer has not been reported yet.
4) CMOS based MEMS vertical axis accelerometer with a differential varying gap capacitive sensing electrodes is presented. A post-CMOS wet etching process is used to form the suspended electrode in the accelerometer. However, one of the main challenges is the implementation of a process for the fabrication of a vertical axis accelerometer design to the lateral ones which should be based on the same working principle, differential sensing with varying gap electrodes.
5) Another approach for the fabrication of a three-axis accelerometer is assembling of two or three single axis accelerometers on a separate substrate for three-dimensional acceleration sensing. However, this approach increases the packaging size, cost and also causes high cross axis sensitivities due to the highly possible misalignment problems.

### Brief Description of the Invention:

Brief description of this invention is explained below.
1) An out of plane vertical axis accelerometer structure is introduced enabling differential capacitive sensing in the out of plane direction in which a movable proof mass is located between two different fixed electrodes namely bottom and top electrode, and the sensing mechanism is based on the varying gap method.
2) For the first time handle layer of the SOI wafer is used as one of the fixed electrode for a vertical axis accelerometer, top electrode that allows differential capacitive sensing in the out of plane directions with a second fixed electrode defined on the surface of the base substrate.
3) Using the proposed out of plane axis accelerometer, a three axis differential capacitive three axis accelerometer is fabricated. This out of plane axis accelerometer structure can be used for both fabrication of a three-axis accelerometer with a single proof mass or with individual single axis accelerometers on the same substrate.
4) By using the standard single axis accelerometer process (SOI on glass process), it is possible to fabricate a three axis accelerometer on the same substrate.
5) With the proposed out of plane axis accelerometer, dimension of the three axis accelerometer is kept smaller compared to the available fabrication approaches. Those dimensions can be further decreased by using a single proof mass three-axis accelerometer which is based on the proposed invention.
6) Using the proposed invention, additional packaging processes for the fabricated devices to protect them from the environment is not required. Because, devices are already physically protected from the environment by the handle layer of the SOI wafer. Moreover, hermetically sealing the devices can also be achieved using this method which requires a number of vertical feedthroughs formed either on the base substrate, glass wafer, or the SOI substrate using suitable fabrication approaches well known by the ones skilled in the art.

With the presented invention, a three-axis accelerometer with differential capacitive sensing elements in all axes is fabricated on the same substrate using SOI on glass process. To achieve this, first a novel vertical axis accelerometer is designed with two different fabrication approaches having the same working principle as comb finger type lateral axis accelerometers and a novel fabrication approach is introduced in order to implement the fabrication of this vertical axis accelerometer to the lateral ones.

With the introduced vertical axis accelerometer and the fabrication approach, it is possible to realize an out of plane accelerometer having a linearly moving electrode between two fixed electrodes (bottom and top electrode) enabling the differential capacitive acceleration sensing for the vertical axis direction. Furthermore, comb electrode type differential sensing lateral axis accelerometers can also be fabricated at the same time on the same substrate, which makes it possible to sense the applied acceleration in all three orthogonal directions by using those three individual accelerometers fabricated on the same substrate.

It is also possible to fabricate a monolithic single proof mass accelerometer with the proposed invention by using the novel vertical axis accelerometer design in which the accelerometer dimension can also be further decreased. Furthermore, working principle of all sensing elements is based on the same principle, varying gap. So that, same readout circuitry can be employed for all the sensing elements.

Another advantage of the proposed invention is that the fabrication of the vertical axis accelerometer is similar to the one that is used for the fabrication of the lateral axis accelerometers, which is a well-established process, SOI on glass process. Therefore, by using this standard single axis accelerometer fabrication approach it is possible to fabricate a three-axis accelerometer.

Finally, handle layer of the SOI wafer is not only used as a top electrode for the vertical axis accelerometer, but that layer is also used for physically isolating the accelerometers from the environment, so packaging. By using vertical feedthroughs either on the SOI wafer side or on the glass wafer side, it is also possible to have hermetically isolated capacitive sensors.

### Main Features of the Invention:

First of all, an out of plane accelerometer with differential capacitance sensing elements is proposed in this invention in which a movable electrode is placed between two fixed electrodes namely top and bottom electrode using SOI on glass process.

This out of plane accelerometer is constructed by three major layers; namely, base substrate, structural layer of the SOI wafer, and handle layer of the SOI wafer. The first layer, base substrate, can be made of a glass such as Borosilicate or Pyrex, on which metal inter connection lines, recess for those metal connection lines, and the bottom electrode metal layer are defined on the surface of that substrate by using suitable metal deposition, masking and etching processes.

The second layer is the structural layer of the SOI wafer on which the suspended movable proof mass of the out of plane accelerometer is defined.

The first capacitive gap between the movable electrode defined on the structural layer of the SOI wafer and the fixed bottom electrode defined on the surface of the first substrate, base substrate, is either defined on the surface of the base substrate or the surface of the SOI substrate's structural layer by using suitable masking layers and etchants known by the ones skilled in the art.

The second capacitive gap between the movable electrode defined on the structural layer of the SOI wafer and the fixed top electrode defined on the handle layer of the SOI wafer is defined by the existing buried oxide layer of the SOI wafer, in which the movable electrode defined on the structural layer of the SOI wafer becomes suspended after selectively etching that buried oxide layer with a Hydrofluoric acid (HF) based etchants including but not limited to Buffered HF (BHF), Vapor HF (VHF), etc.

The third layer is the handle layer of the SOI wafer, which is used not only as a top electrode for the out of plane accelerometer but also for physically isolating the movable electrode from the environment, so packaging. Furthermore, the top electrode metal connection line can also be defined on that layer.

Finally, in order to have a functional out of plane accelerometer, attachment of the two substrates, namely base substrate and the SOI substrate is required which can be achieved by using conventional wafer bonding processes including but not limited to eutectic bonding, thermos-compression bonding, anodic bonding, etc. which may require additional thin film deposition, masking, and etching steps on either the surface of the first, or the second substrate or both. Moreover, releasing the proof mass can be done either before or after the bonding step by selectively etching the oxide layer of the SOI wafer with a Hydrofluoric acid (HF) based etchants including but not limited to Buffered HF (BHF), Vapor HF (VHF), etc. If the releasing is done after the bonding step, deposition of an additional protection layer on the base substrate is required to protect the base substrate from the oxide etchant in which this thin film material should be an electrically non-conducting material with a high selectivity to the base substrate etchant.

Since it is possible to fabricate an out of plane accelerometer with differential capacitive sensing elements using the proposed structure, this structure can also be used for the fabrication of a three axis accelerometer either having individual in plane and out of plane axis accelerometers formed on the same substrate using the proposed invention or with a single proof mass accelerometer that is capable of sensing the acceleration in all three axis in which all those accelerometers are also packaged, physically isolated from the environment.

So, for the first time handle layer of the SOI wafer is used as one of the fixed electrode for an out of plane accelerometer enabling differential capacitive sensing for detecting the out of plane acceleration with a second fixed electrode defined on the surface of the base substrate. By combining the proposed vertical axis accelerometer fabrication technology with the regular in plane lateral axis comb finger type capacitive accelerometer, a three axis differential capacitive sensing accelerometer is introduced in which all movable and fixed structures are physically sealed from the environment.

### Definition of the Figures

In order to explain the present invention in more detail, the following figures have been prepared and attached to the description. The list and the definition of the figures are given below.
- **FIG. 1A**: shows cross sectional view of the first out of plane accelerometer in which the gap between the proof mass and the base substrate [20] is defined on the base substrate.
- **FIG. 1B**: shows cross sectional view of the SOI wafer in which an oxide layer is sandwiched between two conductive thick silicon layers with an etched recess for the metallization.
- **FIG. 1C**: shows cross sectional view of the SOI wafer after etching the structural layer, and the handle layer.
- **FIG. 1D**: shows cross sectional view of the base substrate.
- **FIG. 1E**: shows cross sectional view of the base substrate on which gap between the proof mass and the base substrate [20] is defined on the base substrate.
- **FIG. 2**: shows cross sectional view of the second out of plane accelerometer.
- **FIG. 3**: shows cross sectional view of the third out of plane accelerometer.
- **FIG. 4**: shows cross sectional view of the fourth out of plane accelerometer.
- **FIG. 5**: shows partial top view of the proof mass structure with a perforation defined on the structural layer of the SOI wafer
- **FIG. 6**: shows cross sectional view of the three axis accelerometer having individual in plane and out of plane accelerometers on the same substrate for the case in which the gap between the proof mass defined on the structural layer of the SOI wafer and the base substrate is defined on the structural layer of the SOI wafer by masking and selectively etching the silicon substrate (proof mass of the comb finger type lateral axis accelerometers are also defined on the same substrate).
- **FIG. 7**: shows cross sectional view of the three axis accelerometer having individual in plane and out of plane accelerometers on the same substrate for the case in which the gap between the proof mass defined on the structural layer of the SOI wafer and the base substrate is defined on the structural layer of the SOI wafer by masking and selectively etching the silicon substrate. (in addition, a protection layer, non-conductive and selective to oxide etchants is used on the base substrate to protect the base substrate during the buried oxide layer etching step)
- **FIG. 8**: shows cross sectional view of the three axis accelerometer having individual in plane and out of plane accelerometers on the same substrate for the case in which the gap between the proof mass defined on the structural layer of the SOI wafer and the base substrate is defined on the base substrate either by masking and selectively etching the base substrate or by deposition of a non-conductive layer, masking and etching steps of the deposited layer (proof mass of the comb finger type lateral axis accelerometers are also defined on the same substrate)

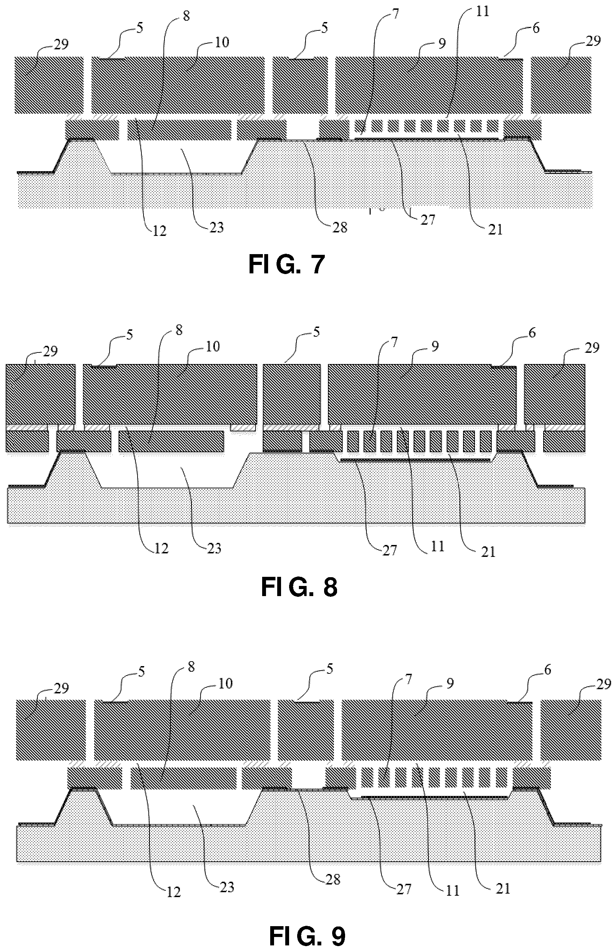

- **FIG. 9**: shows cross sectional view of the three axis accelerometer having individual in plane and out of plane accelerometers on the same substrate for the case in which the gap between the proof mass defined on the structural layer of the SOI wafer and the base substrate is defined on the base substrate either by masking and selectively etching the base substrate or by deposition of a non-conductive layer, masking and etching steps of the deposited layer (in addition, a protection layer, non-conductive and selective to oxide etchants is used on the base substrate to protect the base substrate during the buried oxide layer etching step).
- **FIG. 10**: shows cross sectional view of the three axis accelerometer with a single proof mass structure for the case in which the gap [21] between the proof mass [7] defined on the structural layer of the SOI wafer [1] and the base substrate [20] is defined on the base substrate either by masking and selectively etching the base substrate or by deposition of a non-conductive layer, masking and etching steps of the deposited layer.
- **FIG. 11**: shows cross sectional view of the three axis accelerometer with a single proof mass structure for the case in which the gap [21] between the proof mass [7] defined on the structural layer of the SOI wafer [1] and the base substrate [20] is defined on the structural layer [1] of the SOI wafer by masking and selectively etching the silicon substrate.

### Definition of the Elements (Features/ Components/ Parts) on the Figures

The definition of the features/components/parts that are shown in the figures that are prepared in order to explain the present invention better are separately numbered and given below.
0- Out of plane axis accelerometer
1- Structural layer of the SOI (Silicon On Insulator) wafer
2- Buried oxide layer of the SOI (Silicon On Insulator) wafer
3- Handle layer of the SOI (Silicon On Insulator) wafer
4- Recess on the handle layer of the SOI wafer for the metallization step
5- Metal connection layer for electrically grounding purpose on the handle layer of the SOI wafer
6- Top electrode metal connection layer on the handle layer of the SOI wafer
7- Proof mass (movable electrode) of the out of plane axis accelerometer defined on the structural layer of the SOI wafer
8- Proof mass (movable electrode) of the in plane axis accelerometer defined on the structural layer of the SOI wafer
9- top electrode
10- Packaging layer
11- Gap between the top electrode and the proof mass of the out of plane axis accelerometer
12- Gap between the packaging layer and the mechanical structure of the in plane axis accelerometer
13- Silcon on insulator (SOI) wafer
20- Base substrate
21- Gap between the bottom electrode and the proof mass of the out of plane axis accelerometer
22- Anchor
23- Recess region (for the out of plane axis accelerometers defined on the base substrate by masking and etching processes on which inter metallization lines are placed)
24- Recess region (on the base substrate where the electrical connection pads are placed for both out of plane and in plane axis accelerometers)
25- Metal inter connection lines (placed on the surface of the recess etched base substrate for carrying the electrical signals from the out of plane and in plane axis accelerometers to the pad metallization layer.)
26- Metal lines (placed on the base substrate for eutectic bonding option in which glass substrate is bonded to the SOI substrate with eutectic bonding process)
27- Bottom electrode
28- Protection layer
29- Sacrificial layer
30- Comb finger type electrodes
31- Circular type perforation holes
32- Square type perforation holes Spring connection region
33- Individual single axis accelerometers on the same substrate
34- Single proof mass three-axis accelerometer

### Detailed Description of The Invention

Out of plane axis accelerometer (0) which is developed in this invention; that is capable of sensing acceleration in out of plane direction with differential sensing elements in which a movable electrode is placed between two fixed electrodes namely top and bottom electrode in which for the first time handle layer of the SOI wafer is used as an sensing fixed electrode, top electrode, comprises;
- Structural layer (1) of the SOI (Silicon On Insulator) wafer on which movable electrodes of the in plane and out of place accelerometers are defined.
- Buried oxide layer (2) of the SOI (Silicon on Insulator) wafer. The second capacitive gap for the out of plane accelerometer is defined by that buried oxide layer which is selectively etch to release the proof masses of the in plane and out of plane axis accelerometers.
- Handle layer (3) of the SOI (Silicon On Insulator) wafer. This layer is used as a top electrode for the out of plane axis accelerometer for the first time. Moreover, this layer is also used for physically isolation the in plane and out of plane axis accelerometers from the environment, so for packaging.
- Recess on the handle layer (4) of the SOI wafer for the metallization step. This recess is used for placing the metal contact layer for electrically grounding (5) and getting electrical contact from the top electrode of the out of plane axis accelerometer.
- Metal connection layer (5) for electrically grounding purpose on the handle layer of the SOI wafer. This metallization layer is used for electrically grounding the handle layer of the SOI wafer except the top electrode region.
- Top electrode metal connection (6) layer on the handle layer of the SOI wafer. This region is used for getting electrical contact from the top electrode of the out of plane axis accelerometer.
- Proof mass (movable electrode) (7) of the out of plane axis accelerometer defined on the structural layer of the SOI wafer. This structure is defined on the structural layer (1) of the SOI wafer which becomes suspended after selectively etching the buried oxide layer (2) of the SOI wafer and used for detecting the acceleration in out of plane axis accelerometer.
- Proof mass (movable electrode) (8) of the in plane axis accelerometer defined on the structural layer of the SOI wafer. This structure is defined on the structural layer (1) of the SOI wafer which becomes suspended after selectively etching the buried oxide layer (2) of the SOI wafer and used for detecting the acceleration in in of plane axis accelerometer.
- Top electrode (9). This structure is defined on the handle layer (3) of the SOI wafer that is used as a top electrode for the out of plane axis accelerometer.
- Packaging layer (10). This structure is the defined on the handle layer (3) of the SOI wafer and that is used for protecting the in plane axis accelerometer from the environment, so for packaging.
- Gap (11) between the top electrode (9) and the proof mass (7) of the out of plane axis accelerometer (0). This is the buried oxide layer (2) of the SOI wafer and is used as a gap between the top electrode (9) and the proof mass (7) of the out of plane axis accelerometer in which selectively removal of that layer is required in order to release the movable electrode.
- Gap (12) between the packaging layer (10) and the mechanical structure of the in plane axis accelerometer. This is the buried oxide layer (2) of the SOI wafer between the mechanical structure of the in plane axis accelerometer and the packaging layer (10) and is selectively removed in order to release the in plane axis accelerometer.
- Silcon on insulator (SOI) wafer (13). SOI wafer in which a buried oxide layer (2) is sandwiched between two conductive silicon layers that is used for the fabrication of the out of plane and in plane axis accelerometer which is available commercially.
- Base substrate (20). This is the base substrate which can be made of a glass such as Borosilicate or Pyrex, on which metal inter connection lines and the bottom electrode metal layer of the out of plane axis accelerometer are defined on the surface of that substrate.
- Gap (21) between the bottom electrode (27) and the proof mass (7) of the out of plane axis accelerometer. This is the gap between the proof mass (7) and the bottom electrode (27) of the out of plane axis accelerometer defined either on the surface of the structural layer (1) of the SOI wafer or on the surface of the base substrate which is defined by selectively etching the surface and equal to the thickness of the buried oxide layer (2) of the SOI wafer.
- Anchor (22). Anchor region for the in plane and out of plane axis accelerometers defined on the base substrate (20) by masking and etching processes of the base material.
- Recess region (23) for the out of plane axis accelerometers defined on the base substrate by masking and etching processes on which inter metallization lines are placed.
- Recess region (24) on the base substrate where the electrical connection pads are placed for both out of plane and in plane axis accelerometers.
- Metal inter connection lines (25) placed on the surface of the recess etched base substrate for carrying the electrical signals from the out of plane and in plane axis accelerometers to the pad metallization layer.
- Metal lines (26) placed on the base substrate for eutectic bonding option in which glass substrate is bonded to the SOI substrate with eutectic bonding process.
- Bottom electrode (27). Bottom electrode of the out of plane axis accelerometer that is placed on the base substrate which should be a metal layer, at least it should be a conductive layer.
- Protection layer (28). This layer is used in order to protect the base substrate from the etchant of the buried oxide layer for the case where the releasing of the devices is done after bonding the two substrate to each other. This layer is not required for the case when the releasing of the devices are done before the bonding process.
- Sacrificial layer (29). This layer is defined on the SOI substrate around the MEMS accelerometers as a frame which is removed after the dicing step and used for protecting the devices during the fabrication steps.
- Comb finger type electrodes (30). Comb finger type electrode structure used for sensing the acceleration in plane direction that can be used in either single proof mass or individual in plane axis accelerometers for sensing the in plane axis acceleration.
- Circular type perforation holes (31). Circular type perforation holes defined on the proof mass of the out of plane axis accelerometer in order to release the devices by selectively etching the buried oxide layer of the SOI wafer.
- Square type perforation holes (32). Square perforation holes defined on the proof mass of the out of plane axis accelerometer in order to release the devices by selectively etching the buried oxide layer of the SOI wafer
- Spring connection region (33). Spring connection region defined on the structural layer of the SOI wafer that allows the proof mass to move in the sense directions.
- Individual single axis accelerometers on the same substrate (34): Both individual lateral and vertical axis accelerometer are fabricated on the same substrate to achieve a three-axis acceleration sensing device in which the proposed vertical axis accelerometer is used.
- Single proof mass three-axis accelerometer (35): A three axis accelerometer with a single proof mass which is based on the invented out of plane axis accelerometer.

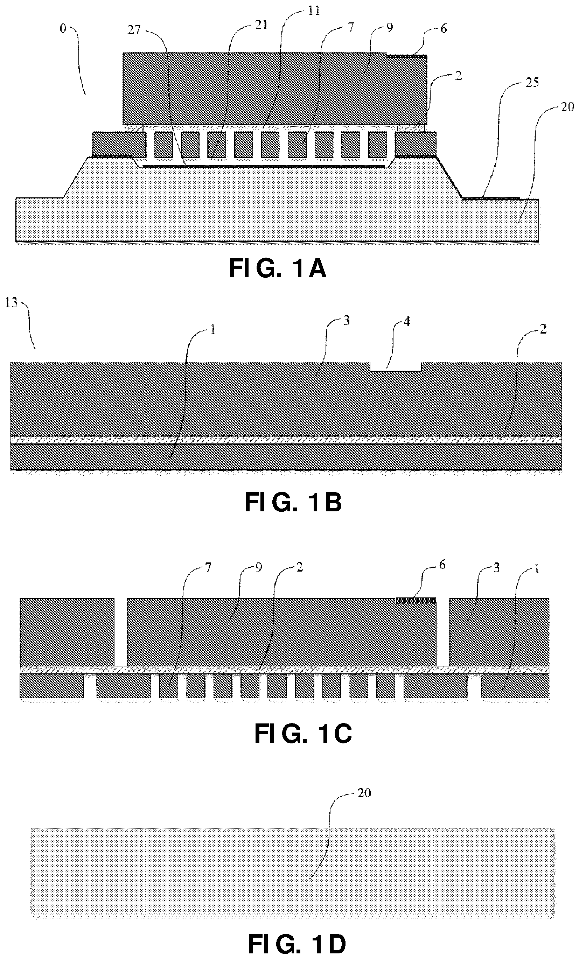

**FIG. 1A** shows cross sectional view of the first out of plane accelerometer in which the gap [21] between the proof mass [7] defined on the structural layer of the SOI wafer [1] and the base substrate [20] is defined on the base substrate either by masking and selectively etching the base substrate or by deposition of a non-conductive layer, masking and etching steps of the deposited layer. In order to have differential capacitive sensing, the second gap [11] between the top electrode [9] defined on the handle layer of the SOI wafer [1] and the proof mass [7] defined on the structural layer of the SOI wafer [1] defined by the thickness of the buried oxide layer [2] of the SOI wafer [1] is selectively etched with a Hydrofluoric acid (HF) based etchant including but not limited to Buffered HF (BHF), Vapor HF (VHF), etc. Metal connection lines [25] are also defined on the surface of the base substrate by using suitable metal deposition, masking and etching processes.

**FIG. 1B** shows cross sectional view of the SOI wafer in which an oxide layer [2] is sandwiched between two conductive thick silicon layers [1, 3] is shown where a recess region [4] is defined on the top electrode to deposit a metal layer inside for getting electrical connection from the top electrode.

**FIG. 1C** shows cross sectional view of the SOI wafer after etching the structural layer [1], and the handle layer [3] in which the proof mass [7] and the top electrode [9] are defined. Moreover, top electrode metal connection layer [6] is also defined on the etched recess region [4] of the top electrode [9].

**FIG. 1D** shows cross sectional view of the base substrate [20].

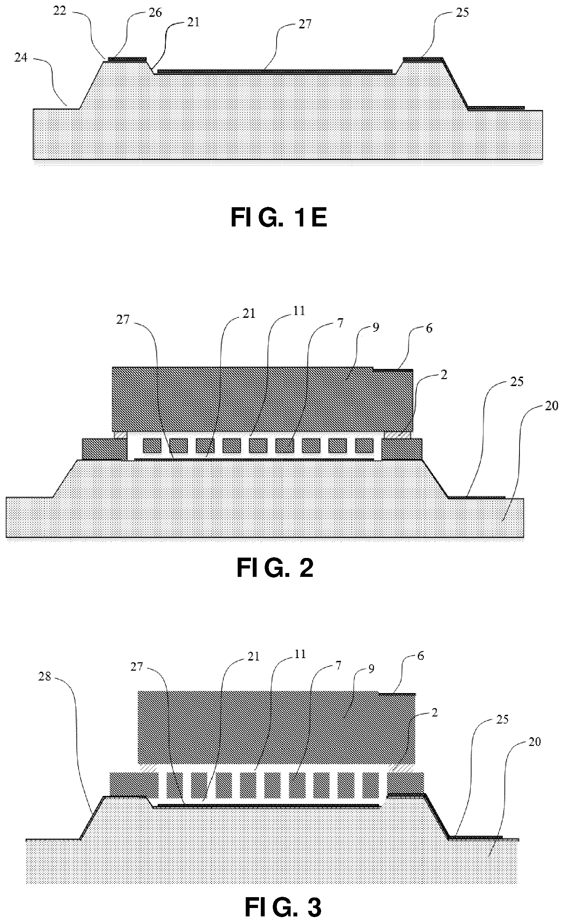

**FIG. 1E** shows cross sectional view of the base substrate [20] on which gap [21] between the proof mass [7] and the base substrate [20] is defined on the base substrate either by masking and selectively etching the base substrate or by deposition of a non-conductive layer, masking and etching steps of the deposited layer. Metal interconnection layers [25] and the metal bottom electrode layer [27], anchors for the proof mass [22], and the metal connection regions [24] are also defined on the base substrate [20].

**FIG. 2** shows cross sectional view of the second out of plane accelerometer in which the gap [21] between the proof mass [7] defined on the structural layer of the SOI wafer [1] and the base substrate [20] is defined on the structural layer [1] of the SOI wafer by masking and selectively etching the silicon substrate. The remaining layer processing steps as same as given in Fig.1.

**FIG. 3** shows cross sectional view of the third out of plane accelerometer in which the gap [21] between the proof mass [7] defined on the structural layer of the SOI wafer [1] and the base substrate [20] is defined on the base substrate [20] by masking and selectively etching the base substrate. In addition, a protection layer [28], non-conductive and selective to oxide etchants, is used on the base substrate to protect the base substrate from the oxide etchant that is used for releasing the out of plane accelerometer during the removal of the oxide layer [2] of the SOI wafer. The remaining layer processing steps as same as given in Fig.1.

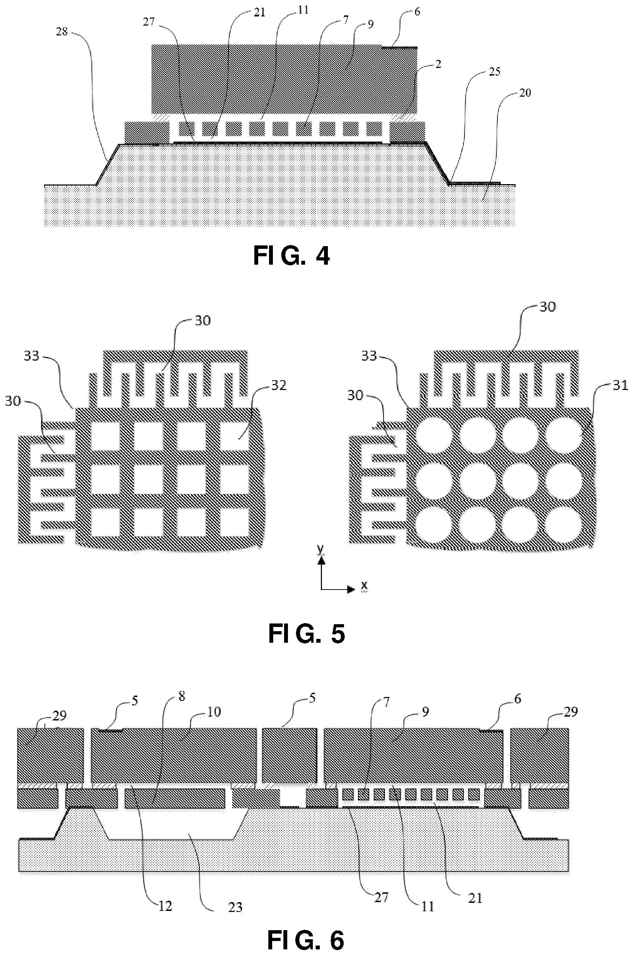

**FIG.4** shows cross sectional view of the fourth out of plane accelerometer in which the gap [21] between the proof mass [7] defined on the structural layer of the SOI wafer [1] and the base substrate [20] is defined on the structural layer [1] of the SOI wafer by masking and selectively etching the silicon substrate. In addition, a protection layer [28], non-conductive and selective to oxide etchants, is used on the base substrate to protect the base substrate from the oxide etchant that is used for releasing the out of plane accelerometer during the removal of the oxide layer [2] of the SOI wafer. The remaining layer processing steps as same as given in Fig.1.

**FIG.5** shows partial top view of the proof mass structure [7] defined on the structural layer of the SOI wafer [1] for a single proof mass three axis accelerometer electrode structure with comb finger type electrodes [30] for the lateral axis accelerometers in which circular [31] and rectangular [32] perforation holes are used on the proof mass where the cross sectional view is similar to the ones given in FIG1, FIG2, FIG3, and FIG4. Novel spring structures are also connected from the spring connection regions [33] to allow the proof mass to move in all sense directions.

**FIG.6** shows cross sectional view of the three axis accelerometer having individual in plane and out of plane accelerometers on the same substrate for the case in which the gap [21] between the proof mass [7] defined on the structural layer of the SOI wafer [1] and the base substrate [20] is defined on the structural layer [1] of the SOI wafer by masking and selectively etching the silicon substrate. Proof mass [8] of the comb finger type lateral axis accelerometers are also defined on the same substrate with a capping structure [9, 10] that physically isolates the proof masses from the environment with a metal connection layer [5] for electrically grounding purpose on the handle layer [3] of the SOI wafer.

**FIG.7****:** shows cross sectional view of the three axis accelerometer having individual in plane and out of plane accelerometers on the same substrate for the case in which the gap [21] between the proof mass [7] defined on the structural layer of the SOI wafer [1] and the base substrate [20] is defined on the structural layer [1] of the SOI wafer by masking and selectively etching the silicon substrate. In addition, a protection layer [28], non-conductive and selective to oxide etchants, is used on the base substrate to protect the base substrate from the oxide etchant that is used for releasing the out of plane accelerometer during the removal of the oxide layer [2] of the SOI wafer. Proof mass [8] of the comb finger type lateral axis accelerometers are also defined on the same substrate with a capping structure [9, 10] that physically isolates the proof masses from the environment with a metal connection layer [5] for electrically grounding purpose on the handle layer [3] of the SOI wafer.

**FIG.8** shows cross sectional view of the three axis accelerometer having individual in plane and out of plane accelerometers on the same substrate for the case in which the gap [21] between the proof mass [7] defined on the structural layer of the SOI wafer [1] and the base substrate [20] is defined on the base substrate either by masking and selectively etching the base substrate or by deposition of a non-conductive layer, masking and etching steps of the deposited layer. Proof mass [8] of the comb finger type lateral axis accelerometers are also defined on the same substrate with a capping structure [9, 10] that physically isolates the proof masses from the environment with a metal connection layer [5] for electrically grounding purpose on the handle layer [3] of the SOI wafer.

**FIG.9****:** shows cross sectional view of the three axis accelerometer having individual in plane and out of plane accelerometers on the same substrate for the case in which the gap [21] between the proof mass [7] defined on the structural layer of the SOI wafer [1] and the base substrate [20] is defined on the base substrate either by masking and selectively etching the base substrate or by deposition of a non-conductive layer, masking and etching steps of the deposited layer. In addition, a protection layer [28], non-conductive and selective to oxide etchants, is used on the base substrate to protect the base substrate from the oxide etchant that is used for releasing the out of plane accelerometer during the removal of the oxide layer [2] of the SOI wafer. Proof mass [8] of the comb finger type lateral axis accelerometers are also defined on the same substrate with a capping structure [9, 10] that physically isolates the proof masses from the environment with a metal connection layer [5] for electrically grounding purpose on the handle layer [3] of the SOI wafer.

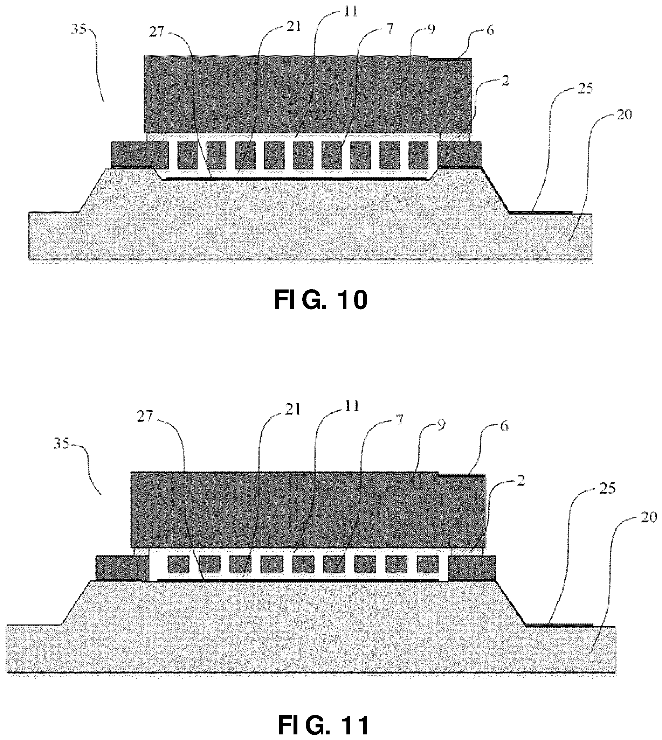

**FIG. 10****:** shows cross sectional view of the three axis accelerometer with a single proof mass structure for the case in which the gap [21] between the proof mass [7] defined on the structural layer of the SOI wafer [1] and the base substrate [20] is defined on the base substrate either by masking and selectively etching the base substrate or by deposition of a non-conductive layer, masking and etching steps of the deposited layer.

**FIG. 11****:** shows cross sectional view of the three axis accelerometer with a single proof mass structure for the case in which the gap [21] between the proof mass [7] defined on the structural layer of the SOI wafer [1] and the base substrate [20] is defined on the structural layer [1] of the SOI wafer by masking and selectively etching the silicon substrate.

The out of plane axis accelerometer (0) which is developed in the present invention is capable of sensing acceleration in out of plane direction with differential sensing elements in which a movable electrode is placed between two fixed electrodes namely top and bottom electrode in which handle layer of the SOI (Silicon On Insulator) wafer is used as an sensing fixed electrode, top electrode, comprises;
- Structural layer (1) of the SOI wafer on which movable electrodes of the in plane and out of place accelerometers are defined,
- Buried oxide layer (2) of the SOI wafer which is selectively etch to release the proof masses of the in plane and out of plane axis accelerometers.
- Recess (4) on the handle layer (3) of the SOI wafer for the metallization step, which is used for placing the metal contact layer (5) for electrically grounding and getting electrical contact from the top electrode of the out of plane axis accelerometer,
- Metal connection layer (5) for electrically grounding purpose on the handle layer (3) of the SOI wafer which is used for electrically grounding the handle layer (3) of the SOI wafer except the top electrode region,
- Proof mass (movable electrode) (8) of the in plane axis accelerometer defined on the structural layer (1) of the SOI wafer which becomes suspended after selectively etching the buried oxide layer (2) of the SOI wafer and used for detecting the acceleration in in of plane axis accelerometer,
- Silcon on insulator (SOI) wafer (13) in which a buried oxide layer (2) is sandwiched between two conductive silicon layers that is used for the fabrication of the out of plane and in plane axis accelerometer which is available commercially,
- Base substrate (20), on which metal inter connection lines and the bottom electrode metal layer of the out of plane axis accelerometer are defined on the surface of that substrate,
   and characterized in that it comprises;
- Handle layer (3) of the SOI wafer which is used for physically isolation the in plane and out of plane axis accelerometers from the environment,
- Top electrode metal connection layer (6) on the handle layer (3) of the SOI wafer which is used for getting electrical contact from the top electrode of the out of plane axis accelerometer,
- Proof mass (movable electrode) (7) of the out of plane axis accelerometer defined on the structural layer (1) of the SOI wafer, which becomes suspended after selectively etching the buried oxide layer (2) of the SOI wafer and used for detecting the acceleration in out of plane axis accelerometer,
- Top electrode (9) which is defined on the handle layer (3) of the SOI wafer that is used as a top electrode for the out of plane axis accelerometer,
- Packaging layer (10) which is defined on the handle layer (3) of the SOI wafer and that is used for protecting the in plane axis accelerometer from the environment, so for packaging,
- Gap between the top electrode (9) and the proof mass (7) of the out of plane axis accelerometer (11), which used as a gap between the top electrode (9) and the proof mass (7) of the out of plane axis accelerometer in which selectively removal of that layer is required in order to release the movable electrode,
- Gap (12) between the packaging layer (10) and the mechanical structure of the in plane axis accelerometer which is the buried oxide layer (2) of the SOI wafer between the mechanical structure of the in plane axis accelerometer and the packaging layer (10) and is selectively removed in order to release the in plane axis accelerometer,
- Gap (21) between the bottom electrode (27) and the proof mass (7) of the out of plane axis accelerometer which is defined either on the surface of the structural layer (1) of the SOI wafer or on the surface of the base substrate which is defined by selectively etching the surface and equal to the thickness of the buried oxide layer (2) of the SOI wafer,
- Bottom electrode (27) of the out of plane axis accelerometer that is placed on the base substrate which should be a metal layer, at least it should be a conductive layer,
- Protection layer (28) which is used in order to protect the base substrate from the etchant of the buried oxide layer for the case where the releasing of the devices is done after bonding the two substrate to each other. This layer is not required for the case when the releasing of the devices are done before the bonding process,
- Sacrificial layer (29) which is defined on the SOI substrate around the MEMS accelerometers as a frame which is removed after the dicing step and used for protecting the devices during the fabrication steps.

The out of plane axis accelerometer (0) which is developed in the present invention can be used for fabrication of either a three axis accelerometer with a single proof mass or an individual single axis accelerometers on the same substrate.

Additionally the out of plane axis accelerometer (0) which is developed in the present invention, the handle layer (3) of the SOI wafer is used as packaging layer.

## Claims

1. Method of manufacturing an out of plane axis accelerometer (0) having
• a base substrate (20) and
• a Silicon on insulator (SOI) wafer (13);
comprising the steps of
I. forming a buried oxide layer (2) on the SOI wafer (13);
II. forming a recess region (23) providing a gap (21) for a bottom electrode (27) on the base substrate (20),
III. forming a protection layer (28) on the base substrate (20);
IV. forming the bottom electrode (27) inside the formed recess region (23),
V. forming eutectic bonding metal lines (26), a metal inter connection line (25) and electrical connection pads on the base substrate (20);
VI. forming a recess (4) on a handle layer (3) of the SOI wafer;
VII. forming a top electrode (9) on the handle layer (3) of the SOI wafer;
VIII. forming a top electrode metal connection line (6) inside the recess (4) on the handle layer (3) of the SOI wafer;
IX. forming a proof mass (7) on the structural layer (1) of the SOI wafer, comprising perforation holes (31, 32) and being located between the top (9) and the bottom electrodes (27), for detecting the acceleration in the out of plane axis accelerometer, the proof mass becomes suspended after selectively etching the buried oxide layer (2) of the SOI wafer;
X. eutectic bonding of the SOI wafer (13) to the base substrate (20);
XI. releasing and suspending the proof mass (7) by selectively etching the buried oxide layer (2) of the SOI wafer (13) through the perforation holes (31, 32) defined on the proof mass (7) of the out of plane accelerometer.

2. An out of plane axis accelerometer (0) comprising
• a base substrate (20);
• a Silicon on insulator (SOI) wafer (13) with a structural layer (1), a buried oxide layer (2) and a handle layer (3);
• a bottom electrode (27);
• a recess region (23) providing a gap (21) for the bottom electrode on the base substrate (20), wherein the bottom electrode (27) is formed inside the recess region (23),
• a protection layer (28) on the base substrate (20);
• a metal inter connection line (25), eutectic bonding metal lines (26) and electrical connection pads formed on the base substrate (20);
• a recess (4) on the handle layer (3) of the SOI wafer;
• a top electrode metal connection line (6) inside the recess (4) on the handle layer (3) of the SOI wafer;
• a top electrode (9) on the handle layer (3) of the SOI wafer;
• a proof mass (7), located between the top (9) and the bottom electrodes (27), formed in the structural layer (1) of the SOI wafer; wherein
• the proof mass (7) comprises perforation holes (31,32) arranged for allowing selectively etching of the buried oxide layer (2) of the SOI wafer (13) through the perforation holes (31, 32) so that the proof mass is released and suspended.

3. Out of plane axis accelerometer according to claim 2, **characterizing in that** base substrate (20) is Borosilicate or Pyrex.

4. Out of plane axis accelerometer according to claim 2, **characterized in that** the handle layer (3) of the SOI wafer is structured to be used packaging layer.

5. A three axis differential capacitive accelerometer with a single proof mass comprising the out of plane axis accelerometer according to claim 2 wherein the accelerometer further comprises an electrode structure arranged for sensing the acceleration of the proof mass in in plane directions.

6. A three axis differential capacitive accelerometer with an individual single out of plane axis accelerometer according to claim 2 and individual in plane axis accelerometers formed on the same substrate.

## Patentansprüche

1. Verfahren zur Herstellung eines Beschleunigungsmessers außerhalb der Ebenenachse (0) mit
• ein Basissubstrat (20) und
• einem Silizium-auf-Isolator (SOI)-Wafer (13);
umfassend die folgenden Schritte
I. Bilden einer vergrabenen Oxidschicht (2) auf dem SOI-Wafer (13);
II. Bilden eines Vertiefungsbereichs (23), der einen Raum (21) für eine untere Elektrode (27) auf dem Basissubstrat (20) bereitstellt,
III. Bilden einer Schutzschicht (28) auf dem Basissubstrat (20);
IV. Bilden der unteren Elektrode (27) innerhalb des gebildeten Vertiefungsbereichs (23),
V. Bilden der eutektischen metallischen Verbindungsleitungen (26), einer metallischen Verbindungsleitung (25) und der elektrischen Anschlussflecken auf dem Basissubstrat (20);
VI. Bilden einer Aussparung (4) auf einer Griffschicht (3) des SOI-Wafers;
VII. Bilden einer oberen Elektrode (9) auf der Griffschicht (3) des SOI-Wafers;
VIII. Bilden einer oberen metallische Elektrodenverbindungsleitung (6) innerhalb der Aussparung (4) auf der Griffschicht (3) des SOI-Wafers;
IX. Bilden einer Prüfmasse (7) auf der Strukturschicht (1) des SOI-Wafers, die Perforationslöcher (31, 32) umfasst und sich zwischen der oberen (9) und der unteren Elektrode (27) befindet, um die Beschleunigung in dem Beschleunigungsmesser außerhalb der Ebene zu erfassen, wobei die Prüfmasse nach selektivem Ätzen der vergrabenen Oxidschicht (2) des SOI-Wafers aufgehängt wird;
X. eutektisches Kleben des SOI-Wafers (13) an das Basissubstrat (20);
XI. Freigeben und Aufhängen der Prüfmasse (7) durch selektives Ätzen der vergrabenen Oxidschicht (2) des SOI-Wafers (13) durch die Perforationslöcher (31, 32), die auf der Prüfmasse (7) des außerhalb der Ebene liegenden Beschleunigungsmessers definiert sind.

2. Beschleunigungsmesser außerhalb der Ebenenachse (0), umfassend
• ein Basissubstrat (20);
• ein Silizium-auf-Isolator (SOI)-Wafer (13) mit einer Strukturschicht (1), einer vergrabenen Oxidschicht (2) und einer Griffschicht (3);
• eine untere Elektrode (27);
• einen Vertiefungsbereich (23), der einen Raum (21) für die untere Elektrode auf dem Basissubstrat (20) bereitstellt, wobei die untere Elektrode (27) innerhalb des Vertiefungsbereichs (23) gebildet ist,
• eine Schutzschicht (28) auf dem Basissubstrat (20);
• eine metallische Verbindungsleitung (25), eutektische metallische Verbindungsleitungen (26) und elektrische Anschlussflächen, die auf dem Basissubstrat (20) gebildet sind,
• eine Aussparung (4) auf der Griffschicht (3) des SOI-Wafers;
• eine obere metallische Elektrodenverbindungsleitung (6) innerhalb der Aussparung (4) auf der Griffschicht (3) des SOI-Wafers;
• eine obere Elektrode (9) auf der Griffschicht (3) des SOI-Wafers;
• eine Prüfmasse (7), die sich zwischen der oberen (9) und der unteren (27) Elektrode befindet und in der Strukturschicht (1) des SOI-Wafers gebildet ist, wobei
• die Prüfmasse (7) Perforationslöcher (31, 32) aufweist, die so angeordnet sind, dass sie ein selektives Ätzen der vergrabenen Oxidschicht (2) des SOI-Wafers (13) durch die Perforationslöcher (31, 32) ermöglichen, so dass die Prüfmasse freigegeben und aufgehängt wird.

3. Beschleunigungsmesser außerhalb der Ebenenachse nach Anspruch 2, **dadurch gekennzeichnet, dass** das Basissubstrat (20) Borosilikat oder Pyrex ist.

4. Beschleunigungsmesser außerhalb der Ebenenachse nach Anspruch 2, **dadurch gekennzeichnet, dass** die Griffschicht (3) des SOI-Wafers strukturiert ist, um als Verpackungsschicht verwendet zu werden.

5. Dreiachsiger kapazitiver Differenzialbeschleunigungsmesser mit einer einzelnen Prüfmasse, umfassend den Beschleunigungsmesser außerhalb der Ebenenachse nach Anspruch 2, wobei der Beschleunigungsmesser ferner eine Elektrodenstruktur umfasst, die so angeordnet ist, dass sie die Beschleunigung der Prüfmasse in ebenen Richtungen erfasst..

6. Dreiachsiger kapazitiver Differenzialbeschleunigungsmesser mit einem individuellen einzelnen Beschleunigungsmesser außerhalb der Ebenenachse nach Anspruch 2 und individuellen Beschleunigungsmessern mit einer Achse in der Ebene, die auf demselben Substrat gebildet sind.

## Revendications

1. Procédé de fabrication d'un accéléromètre à axe hors plan (0) ayant
• un substrat de base (20) et
• une plaquette de silicium sur isolant (SOI) (13) ;
comprenant les étapes suivantes
I. former une couche d'oxyde enterrée (2) sur la plaquette SOI (13) ;
II. former une région d'évidement (23) fournissant un espace (21) pour une électrode inférieure (27) sur le substrat de base (20),
III. former une couche de protection (28) sur le substrat de base (20) ;
IV. former l'électrode inférieure (27) à l'intérieur de la région d'évidement formée (23),
V. former des lignes métalliques de liaison eutectique (26), une ligne d'interconnexion métallique (25) et des plots de connexion électrique sur le substrat de base (20) ;
VI. former un évidement (4) sur une couche de poignée (3) de la plaquette SOI ;
VII. former une électrode supérieure (9) sur la couche de poignée (3) de la plaquette SOI
VIII. former une ligne de connexion métallique d'électrode supérieure (6) à l'intérieur de l'évidement (4) sur la couche de poignée (3) de la plaquette SOI ;
IX. former une masse d'épreuve (7) sur la couche structurelle (1) de la plaquette SOI, comprenant des trous de perforation (31, 32) et étant située entre les électrodes supérieure (9) et inférieure (27), pour détecter l'accélération dans l'accéléromètre à axe hors plan, la masse d'épreuve devient suspendue après gravure sélective de la couche d'oxyde enterrée (2) de la plaquette SOI ;
X. coller eutectiquement la plaquette SOI (13) au substrat de base (20) ;
XI. libérer et suspendre la masse d'épreuve (7) en gravant sélectivement la couche d'oxyde enterrée (2) de la plaquette SOI (13) à travers les trous de perforation (31, 32) définis sur la masse d'épreuve (7) de l'accéléromètre hors plan.

2. Accéléromètre à axe hors plan (0) comprenant
• un substrat de base (20) ;
• une plaquette de silicium sur isolant (SOI) (13) avec une couche structurelle (1), une couche d'oxyde enterrée (2) et une couche de poignée (3) ;
• une électrode inférieure (27) ;
• une région d'évidement (23) fournissant un espace (21) pour l'électrode inférieure sur le substrat de base (20), dans laquelle l'électrode inférieure (27) est formée à l'intérieur de la région d'évidement (23),
• une couche de protection (28) sur le substrat de base (20) ;
• une ligne métallique d'interconnexion (25), des lignes métalliques de connexion eutectique (26) et des plots de connexion électrique formés sur le substrat de base (20) ;
• un évidement (4) sur la couche de poignée (3) de la plaquette SOI ;
• une ligne de connexion métallique d'électrode supérieure (6) à l'intérieur de l'évidement (4) sur la couche de poignée (3) de la plaquette SOI ;
• une électrode supérieure (9) sur la couche de poignée (3) de la plaquette SOI ;
• une masse d'épreuve (7), située entre les électrodes supérieure (9) et inférieure (27), formée dans la couche structurelle (1) de la plaquette SOI ; dans laquelle
• la masse d'épreuve (7) comprend des trous de perforation (31, 32) agencés pour permettre une gravure sélective de la couche d'oxyde enterrée (2) de la plaquette SOI (13) à travers les trous de perforation (31, 32) de sorte que la masse d'épreuve est libérée et suspendue.

3. Accéléromètre à axe hors plan selon la revendication 2, **caractérisé en ce que** le substrat de base (20) est du Borosilicate ou du Pyrex.

4. Accéléromètre à axe hors plan selon la revendication 2, **caractérisé en ce que** la couche de poignée (3) de la plaquette SOI est structurée pour être utilisée comme couche d'emballage.

5. Accéléromètre capacitif différentiel à trois axes avec une seule masse d'épreuve comprenant l'accéléromètre à axe hors plan selon la revendication 2, dans lequel l'accéléromètre comprend en outre une structure d'électrode agencée pour détecter l'accélération de la masse d'épreuve dans des directions planes.

6. Accéléromètre capacitif différentiel à trois axes avec un accéléromètre individuel unique à axe hors du plan selon la revendication 2 et des accéléromètres individuels à axe dans le plan formés sur le même substrat.
